Europäisches Patentamt

European Patent Office

Office européen des brevets

(11) Numéro de publication : **0 313 434 B1**

(12) # FASCICULE DE BREVET EUROPEEN

(45) Date de publication du fascicule du brevet :
**08.07.92 Bulletin 92/28**

(51) Int. Cl.⁵ : **B01D 53/36,** F01N 3/28,
B01J 37/02

(21) Numéro de dépôt : **88402549.5**

(22) Date de dépôt : **10.10.88**

(54) **Procédé de fabrication d'un catalyseur pour le traaitement du gaz d'échappement des moteurs à combustion interne.**

(30) Priorité : **21.10.87 FR 8714519**

(43) Date de publication de la demande :
**26.04.89 Bulletin 89/17**

(45) Mention de la délivrance du brevet :
**08.07.92 Bulletin 92/28**

(84) Etats contractants désignés :
**AT BE CH DE ES FR GB GR IT LI LU NL SE**

(56) Documents cités :
**EP-A- 0 073 703
EP-A- 0 100 267
EP-A- 0 105 113
EP-A- 0 220 505
DE-A- 2 530 822
DE-A- 2 649 825
FR-A- 2 259 235
FR-A- 2 325 805**

(73) Titulaire : **SOCIETE FRANCAISE DES
PRODUITS POUR CATALYSE
"PRO-CATALYSE"
1 avenue de Bois Préau
F-92500 Rueil Malmaison (FR)**

(72) Inventeur : **Blanchard, Gilbert
5, allée des Acacias Lagny-Le-Sec
F-60330 Le Plessis Belleville (FR)**
Inventeur : **Garreau, François
23, rue Du Borrego
F-75020 Paris (FR)**
Inventeur : **Prigent, Michel
11, rue des Marronniers
F-92500 Rueil Malmaison (FR)**
Inventeur : **Dozieres, Richard
Val des 4 Pignons 4, avenue Charles de Gaulle
F-78650 Beynes (FR)**

(74) Mandataire : **Esson, Jean-Pierre et al
Rhône-Poulenc Interservices Service Brevets
Chimie 25, quai Paul Doumer
F-92408 Courbevoie Cedex (FR)**

## Description

La présente invention concerne un procédé de fabrication de catalyseurs destinés au traitement des gaz d'échappement des moteurs à combustion interne.

Elle concerne plus particulièrement un procédé de fabrication de catalyseurs du type comprenant un support monolithique sur la surface duquel est imprégnée une phase catalytiquement active.

Les catalyseurs du type monolithe sont généralement formés d'un substrat revêtu d'une couche ou d'une pellicule en matière poreuse sur laquelle est imprégnée ou déposée la phase catalytiquement active. Ces catalyseurs sont utilisés pour la purification catalytique des gaz d'échappement des moteurs à combustion interne fonctionnant à l'essence et des moteurs diesel.

Le substrat est une structure inerte et rigide, appelée également monolithe, généralement en céramique ou métallique.

Cette structure a, le plus souvent, une forme en nids d'abeille comprenant des canaux ou conduits.

Un grand nombre de catalyseurs a déjà été proposé pour l'élimination des hydrocarbures imbrûlés, du monoxyde de carbone, des oxydes d'azote contenus dans les gaz d'échappement des moteurs à combustion interne.

Ces catalyseurs sont soit multifonctionnels, soit des catalyseurs d'oxydation. Un catalyseur est multifonctionnel s'il permet d'éliminer les trois types principaux de composés polluants contenus dans les gaz d'échappement, à savoir les hydrocarbures imbrûlés, les oxydes d'azote et le monoxyde de carbone. Un catalyseur est annelé catalyseur d'oxydation quand il permet d'oxyder les hydrocarbures imbrûlés et le monoxyde de carbone contenus dans les gaz d'échappement.

Ces catalyseurs, bien que possédant dans certains cas une activité suffisante pour satisfaire les normes anti-pollution en vigueur dans des pays comme les Etats-Unis d'Amérique, le Japon ou l'Europe présentent l'inconvénient majeur d'avoir une activité catalytique diminuant au cours de leur fonctionnement dans un pot catalytique.

Les catalyseurs multifonctionnels contiennent généralement un ou plusieurs métaux précieux associés éventuellement à un ou plusieurs métaux additionnels tels que, par exemple, le nickel, le fer, le zirconium, le vanadium, le chrome ou le cérium, déposés sur un support monolithique.

Ainsi, à titre d'exemple, le brevet européen n° 27 069 décrit un catalyseur comprenant un support à base d'oxyde réfractaire et une phase catalytiquement active constituée de cérium, fer et d'au moins un métal pris dans le groupe comprenant l'iridium et le rhodium, et un métal pris dans le groupe du platine et du palladium.

Le brevet européen n° 54 472 décrit un catalyseur multifonctionnel comprenant un substrat inerte en nids d'abeille revêtu par une couche ou pellicule d'oxyde réfractaire, la phase active étant constituée de cuivre, cérium ou fer, d'au moins un métal pris dans le groupe comportant le platine ou le palladium et d'au moins un métal pris dans le groupe comprenant l'iridium et le rhodium. La phase active est déposée ou imprégnée de façon uniforme sur la surface du support monolithique, par immersion totale du support dans une solution de précurseurs des éléments de la phase active.

Les catalyseurs d'oxydation comprennent généralement un ou plusieurs métaux de la mine du platine tels que le platine et le palladium et éventuellement un ou plusieurs métaux additionnels tels que, le nickel, le fer, le zirconium, le vanadium, le chrome ou le cérium

A titre d'exemple, on peut citer les catalyseurs décrits dans les brevets européens n° 100 267 et 145 584 de la demanderesse.

D'autres exemples de catalyseurs multifonctionnels ou d'oxydation sont donnés dans les brevets européens n° 60 740, 126 676 et 170 588 de la demanderesse.

Pour remédier à la perte d'activité au cours du temps des catalyseurs connus, il a déja été proposé d'utiliser des catalyseurs du type comprenant un support monolithique et des phases catalytiques différentes déposées sur des parties distinctes du support monolithique.

Il est ainsi décrit dans le document EP-A-0105113 un catalyseur présentant, dans le sens de sa longueur, des phases catalytiques multiples et préparé selon un procédé consistant à verser sur les parois du substrat monolithique, et sur des longueurs déterminées, différentes solutions catalytiques d'imprégnation. Toutefois, un tel procédé ne permet pas un dépôt précis et rigoureux des éléments catalytiques à la surface du substrat.

Selon le document DE-A-2 649825, des catalyseurs à phases catalytiques multiples sont préparés selon une méthode consistant à joindre en série deux supports monolithiques, chaque support de départ ne possédant à sa surface qu'une seule phase catalytique, de manière à ce que, après assemblage mécanique des deux supports, on obtienne un catalyseur final présentant, dans le sens de sa longueur, deux phases catalytiques différentes.

L'invention a pour but de proposer un procédé de préparation de catalyseurs post-combustion automobile du type comprenant, sur un même support, différentes phases catalytiques, ledit procédé permettant un

2

controle précis de l'imprégnation des différents éléments catalytiques à la surface du support, et ne necessitant pas la mise en oeuvre d'assemblage mécanique.

A cet effet, l'invention propose un procédé de fabrication d'un catalyseur pour le traitement des gaz d'échappement des moteurs à combustion interne du type comprenant un support monolithique dont la surface est imprégnée sur une partie de sa longueur, à partir d'une de ces extrémités, par une première phase catalytiquement active et sur l'autre partie de sa longueur par une seconde phase catalytiquement active et différente de ladite première phase catalytiquement active, caractérisé en ce qu'il consiste successivement à :

– tremper une extrémité du support monolithique dans un volume déterminé de solution d'un précurseur d'au moins un élément constituant de la première phase catalytiquement active à imprégner, ledit volume étant égal au volume poreux de la partie du support monolithique à imprégner par ladite première phase catalytiquement active

– retourner ledit support pour faire s'écouler ladite solution sur une longueur déterminée du support,

– tremper l'autre extrémité dudit support dans une solution d'un précurseur d'au moins un élément constituant de la seconde phase catalytiquement active à imprégner,

– retourner le support pour faire s'écouler ladite solution imprégnée,

– sécher et calciner ledit support imprégné.

Par catalyseur, on entend des catalyseurs multifonctionnels et/ou des catalyseurs d'oxydation tels que définis ci-dessus.

Le support monolithique est constitué par un substrat inerte et de forme rigide revêtu par une pellicule ou une couche en matière poreuse, avantageusement réfractaire. Cette matière poreuse est, dans un mode préféré de l'invention, une matière macroporeuse.

Comme matière poreuse convenable, on peut citer à titre d'exemple les oxydes réfractaires choisis dans le groupe comprenant les oxydes d'aluminium, magnésium, calcium, strontium, baryum, scandium, yttrium, lanthanides, gallium, silicium, titane, zirconium, hafnium, thorium, niobium, tantale, chrome, molybdène, tungstène.

Dans un mode de réalisation préférée de l'invention, l'oxyde réfractaire est un oxyde d'aluminium.

Des exemples de revêtement à base d'oxyde d'aluminium convenables pour l'invention sont décrits dans le brevet européen n° 73 703 au nom de la Société Rhône-Poulenc.

Ce revêtement peut être déposé notamment par immersion du substrat rigide dans une suspension d'alumine ou une solution d'un précurseur d'alumine, puis séchage et calcination. Il est également possible de réaliser un écoulement de la suspension d'alumine ou de la solution d'un sel d'aluminium à travers les canaux du substrat. Ce revêtement peut également être obtenu par application d'une couche d'alumine active puis calcination.

Le revêtement poreux et son procédé de dépôt ne sont pas critiques pour l'invention.

Les substrats convenables pour l'invention sont notamment les substrats métalliques ou en matière céramique.

Les substrats en matière céramique sont, par exemple, ceux comportant comme matière principale la cordiérite, l'alumine, la mullite, la porcelaine, les carbures de bore ou de silicium.

Les substrats métalliques convenables sont notamment ceux obtenus à partir d'alliages de fer, de nickel et de chrome ou ceux obtenus à partir d'alliages de fer, de chrome, aluminium et cobalt tels que ceux connus sous la marque KANTHAL ou ceux obtenus à partir d'alliages de fer, de chrome d'aluminium et d'yttrium connus sous la marque FECRALLOY. Le métal peut aussi être de l'acier carboné ou de la fonte simple.

On peut avantageusement prétraiter les substrats métalliques à base d'aluminium par chauffage en atmosphère oxydante dans des conditions de durée et de température qui permettent de former, à partir de l'aluminium contenu dans l'alliage, une couche superficielle d'oxyde d'aluminium. Dans le cas des aciers carbonés ou de la fonte, on peut également les prétraiter par recuit du fer ou de l'acier recouvert d'une couche d'aluminium pour obtenir un revêtement d'une couche de diffusion aluminium/fer.

La structure du substrat rigide est avantageusement une structure cellulaire en nids d'abeille qui peut être de forme hexagonale, tétragonale, triangulaire ou ondulée, elle doit permettre le passage de gaz dans les canaux ou conduits formés lors de leur fabrication par extrusion, laminage, solidification d'éléments en forme de feuille etc.

Par ailleurs, les revêtements poreux mis en oeuvre selon l'invention sont avantageusement traités de façon à leur conférer une bonne stabilité thermique au cours du temps. Ces traitements, bien connus de l'homme de l'art, consistent notamment dans une stabilisation de la particule d'alumine ou du revêtement en oxyde d'aluminium par les métaux alcalino-terreux, la silice et/ou les terres rares.

Les phases catalytiquement actives convenables pour l'invention sont à base de métaux précieux choisis dans le groupe comprenant le platine, le palladium, le rhodium, l'iridium.

Il est possible d'associer ces métaux entre eux.

Les phases catalytiquement actives peuvent également comprendre des métaux non précieux appelés métaux additionnels choisis dans le groupe comprenant le nickel, le fer, le zirconium, le vanadium, le chrome, le cérium, le tungstène, le manganèse, l'étain, le germanium, le cobalt, l'uranium, le rhénium, les terres rares.

Ces métaux additionnels peuvent être déposés sur le support poreux du catalyseur monolithique de manière uniforme sur toute la surface de ce catalyseur, ou sur seulement une partie de cette surface, sur l'autre partie pouvant être imprégnée un autre métal ou uniqement un métal précieux.

Ces métaux additionnels, quand ils sont présents de manière homogène sur le catalyseur, peuvent être mélangés à la solution d'alumine avant l'application du support poreux sur le substrat monolithique.

Ils peuvent, bien entendu, également être déposés par immersion du substrat revêtu du support dans une solution de précurseur de ces métaux ou par coulée de cette solution dans les canaux, puis calcination de l'ensemble.

Quand ces métaux ne sont pas appliqués de manière homogène sur la surface du support, le procédé utilisé pour leur application sera avantageusement celui décrit ci-avant pour l'application des métaux précieux.

De manière générale, le procédé de l'invention permet le dépôt d'éléments sur un support de structure monolithique de façon contrôlée sur une partie de la longueur dudit support, et le dépôt d'autres éléments ou des mêmes éléments à des concentrations différentes sur l'autre partie du support.

Par solution d'un précurseur d'une phase catalytique, on entend une solution d'un sel ou composé de l'élément ou d'au moins un des éléments constituant la phase catalytique, ces sels et composés étant thermiquement décomposables.

La concentration en sel de la solution est choisie en fonction de la quantité de phase active à déposer sur le support.

La surface d'imprégnation de la première phase active est déterminée par le volume de solution adsorbé. Ainsi, selon une caractéristique de l'invention, le volume adsorbé de la première phase catalytique est égal au volume poreux de la partie du support monolithique à imprégner.

Toutefois, le volume adsorbé de solution de la seconde phase catalytique peut être avantageusement supérieur au volume poreux de l'autre partie du support monolithique à imprégner.

Il est également possible, sans sortir du cadre de l'invention, de répéter ces opérations avec le même support après l'avoir séché et calciné. Ainsi, il est possible de déposer successivement plusieurs éléments sur le support et sur des surfaces déterminées, qui peuvent varier.

Donc, le procédé de l'invention permet d'avoir une nature et/ou concentration de phase catalytique différentes sur la longueur du catalyseur.

Les concentrations des phases catalytiques sur le support ne sont pas critiques.

D'autres caractéristiques, détails et but de l'invention apparaîtront plus clairement au vu des exemples indiqués ci-dessous et donnés uniquement à titre indicatif.

Exemple 1- Préparation d'un support de catalyseur de structure monolithique.

On prépare un liant et une charge d'alumine selon le procédé décrit dans la demande de brevet européen n° 73 703.

Le liant d'alumine (I) est préparé selon le procédé suivant.

5 000 g d'alumine obtenue par deshydratation d'hydrargillite dans un courant de gaz chaud à 800°C sont introduits dans un autoclave contenant une solution d'acide nitrique. On chauffe la suspension en l'agitant pendant 4 heures à 180°C. La suspension obtenue, qui constitue le liant d'alumine (I) est séchée par atomisation à 150°C pour obtenir une poudre présentant aux rayons X une structure de boehmite fibrillaire.

Une partie de cette poudre est calcinée sous air à 600°C pendant deux heures pour obtenir la charge d'alumine (II).

On disperse 200 g de liant alumine (I) sous forme de poudre dans deux litres d'eau, après agitation on ajoute 800 g de charge d'alumine (II). Après agitation, on obtient une suspension utilisée pour le revêtement d'une structure monolithique en céramique en forme de nids d'abeille présentant soixante deux cellules par cm². Cette structure est plongée dans la suspension précitée contenant 30 % en poids d'alumine. Après égouttage et séchage de la structure monolithe pour vider entièrement les canaux, celle-ci est calcinée à 600°C pendant trois heures.

On obtient ainsi un support monolithique sur lequel on imprégnera des phases catalytiques.

Exemple 2 - Catalyseur A selon l'invention

On immerge un support monolithique de 1,98 litre enduit comme à l'exemple 1 dans une solution aqueuse de nitrate de cérium pour déposer, après calcination, 6 % en poids de cérium par rapport au substrat poreux et au support alumine.

Le cérium est ainsi réparti uniformément sur toute la surface du support.

Selon l'invention, les métaux précieux sont déposés de manière différenciée sur le support monolithique.

Ainsi, le support est imprégné par trempage d'une face dans 169 ml d'une solution aqueuse d'acide hexachloroplatinique. Après adsorption totale de la solution, le support est retourné pour laisser s'écouler la solution imprégnée sur la partie déterminée de celui-ci.

On trempe ensuite l'autre face du support dans 169 ml d'une solution aqueuse de nitrate de rhodium. Après adsorption de la solution, le support est à nouveau retourné pour laisser s'écouler la solution ainsi adsorbée.

Le catalyseur à structure monolithique est ensuite séché à 150°C puis activé par calcination.

Le catalyseur ainsi préparé contient globalement et en poids rapporté au catalyseur monolithique 0,200 % de platine, 0,010 % de rhodium et 6 % de cérium.

Toutefois, dans la première partie du catalyseur (environ 50 % de sa longueur totale), la phase active a la composition suivante rapportée au poids total de cette partie du catalyseur monolithique:

$$
\begin{array}{lll}
\text{Ce} & : & 6\ \% \\
\text{Pt} & : & 0,40\ \%
\end{array}
$$

tandis que dans l'autre partie, la phase active a la concentration suivante :

$$
\begin{array}{lll}
\text{Ce} & : & 6\ \% \\
\text{Rh} & : & 0,02\ \%
\end{array}
$$

Exemple 3 - Catalyseur (B) selon l'invention

On imprègne un support de catalyseur par immersion de la structure monolithique de volume 0,933 l enduit comme à l'exemple 1 dans une solution aqueuse de nitrate de cérium et de nitrate de zirconyle dont les concentrations sont telles, qu'après immersion et calcination, le monolithe contient 6 % en poids de cérium et 2 % en poids de zirconium.

Le support monolithique est ensuite imprégné sur une partie de sa longueur par trempage d'une de ces faces d'extrémité dans 96 ml d'une solution aqueuse d'acide hexahydroxyplatinique contenant 0,5 g de platine.

La structure est ensuite retournée pour laisser s'écouler la solution imprégnée sur la longueur désirée.

Son autre face d'extrémité est alors trempée dans 64 ml d'une solution aqueuse de trichlorure de rhodium et de nitrate de palladium contenant 0,05 g de rhodium et 0,5 g de palladium.

Le support est ensuite retourné pour laisser s'écouler la solution de rhodium et de palladium dans les pores non remplis par la première solution de platine.

L'ensemble est ensuite séché et calciné comme à l'exemple 2.

Le catalyseur (B) ainsi préparé contient en poids rapporté à la totalité du catalyseur 0,10 % de platine, 0,010 % de rhodium, 0,10 % de palladium, 6 % de cérium et 2 % de zirconium.

Toutefois, sur la première partie du catalyseur représentant 60 % de sa longueur, la composition de la phase catalytique est :

| 0,166 %Pt | 6 % Ce | 2 % Zr |

sur l'autre partie de la longueur, la phase catalytique a la composition suivante:

$$
\begin{array}{ll}
0,025\ \% & \text{Rhodium} \\
0,25\ \% & \text{Palladium} \\
6\ \% & \text{Cérium} \\
2\ \% & \text{Zirconium}
\end{array}
$$

(concentrations exprimées en poids d'élément par rapport au poids total de la partie du catalyseur monolithique concerné).

Exemple 4 - Catalyseur (C) selon l'invention

On imprègne un support de catalyseur par immersion de la structure monolithique de volume 0,933 l enduit comme à l'exemple 1 dans une solution aqueuse de nitrate de cérium et de nitrate ferrique dont les concentrations sont telles, qu'après immersion et calcination, le monolithe contient 6 % en poids de cérium et 2 % en poids de fer.

Le support monolithique est ensuite imprégné sur une partie de sa longueur par trempage d'une de ces faces d'extrémité dans 80 ml d'une solution aqueuse d'acide hexahydroxyplatinique contenant 10 g de platine.

La structure est ensuite retournée pour laisser s'écouler la solution imprégnée sur la longueur désirée.

Son autre face d'extrémité est alors trempée dans 80 ml d'une solution aqueuse de trichlorure de rhodium contenant 0,05 g de rhodium.

Le support est ensuite retourné pour laisser s'écouler la solution de rhodium dans les pores non remplis par la première solution de platine.

L'ensemble est ensuite séché et calciné comme à l'exemple 2.

Le catalyseur (C) ainsi préparé contient en poids rapporté à la totalité du catalyseur 0,20 % de platine, 0,010 % de rhodium, 6 % de cérium et 2 % de fer.

Toutefois, sur la première partie du catalyseur représentant 50 % de sa longueur, la composition de la phase catalytique est :

| 0,4 % Pt | 6 % Ce | 2 % Fe |
|---|---|---|

sur l'autre partie de la longueur, la phase catalytique a la composition suivante :

```
0,02 % Rhodium

6    % Cérium

2    % Fer
```

(concentrations exprimées comme dans l'exemple précédent).

Exemple 5 - Catalyseur (D) selon l'art antérieur

On imprègne par une solution aqueuse de cérium et de zirconium un support monolithique de 0,933 litre comme à l'exemple 3. Après immersion et calcination, le monolithe contient 6 % en poids de cérium et 2 % en poids de zirconium.

Le support monolithique est ensuite immergé dans 160 ml d'une solution aqueuse d'acide hexahydroxyplatinique, de trichlorure de rhodium hydraté et de nitrate de palladium contenant 0,25 g de platine, 0,025 g de rhodium et 0,25 g de palladium.

Le catalyseur est ensuite traité comme à l'exemple 3.

Le catalyseur (D) ainsi préparé contient en poids rapporté au catalyseur monolithique 0,10 % de platine, 0,010 % de rhodium, 0,1 % de palladium, 6 % de cérium et 2 % de zirconium répartis uniformément sur toute la surface du support.

Exemple 6 - Activités des divers catalyseurs mesurées sur voiture

Le présent exemple rassemble les résultats obtenus sur voiture selon les normes en vigueur aux Etats-Unis d'Amérique avec les divers catalyseurs (A), (B), (C), et (D) décrits respectivement dans les exemples 2 à 5, après un vieillissement de 800 heures sur banc moteur.

Les catalyseurs monolithiques ont été montés dans des enveloppes métalliques soudées et installées sur la ligne d'échappement. Les catalyseurs monolithiques préparés selon l'invention ont été placés de telle façon que la partie imprégnée par la première solution d'imprégnation corresponde à la face d'entrée des gaz dans le catalyseur.

Les vieillissements ont été effectués en plaçant le pot catalytique à une distance de 0,70 m de la sortie culasse d'un moteur d'automobile accouplé à un frein dynamométrique. Le moteur utilisé était un moteur RENAULT Type J7T.718 d'une cylindrée de 2 165 cm$^3$ alimenté par injection électronique d'essence (système BOSCH L-Jétronic avec régulation de richesse par sonde à oxygène).

Le cycle de marche du moteur pendant le vieillissement comportait les quatre phases suivants :

I - 6 minutes de ralenti,

II - 25 minutes à 4 000 tours/minute, 54 chevaux,

III - 4 minutes à 2 500 tours/minute, 25 chevaux,

IV - 25 minutes à 4 000 tours/minute, 54 chevaux.

La température des gaz en entrée pot catalytique était de 800 à 820° pendant les phases II et IV du cycle.

Le contrôle de vieillissement des catalyseurs a été effectué en transférant les pots catalytiques sur un véhicule RENAULT FUEGO USA modèle 1985 muni du même type de moteur que celui utilisé pour les essais de vieillissement au banc. Les mesures d'émissions ont été effectuées sur un banc à rouleau en suivant la procédure américaine FTP décrite dans l'article suivant : "Federal Register, Vol. 42, n° 124 - June 28, 1977, pages 32 906 à 33 004, Title 40 Protection of Environment, Chap. 1, Environmental Protection Agency, Part 86 Central of air pollution from new-motor vehicles and new-motor vehicle engines".

Le réglage du frein hydraulique simulant la résistance à l'avancement du véhicule sur route, effectué conformément a la norme fédérale américaine correspondait sur le banc à rouleaux utilise à une force de traction à la balance de 25 kgf à 80 km/h.

Les émissions de base du véhicule sans pot catalytique étaient les suivantes :

CO : 13,6 g/mile

HC : 2,6 g/mile

$NO_x$ : 3,3 g/mile

TABLEAU I : Emissions d'oxyde de carbone (CO), d'hydrocarbures (HC) et d'oxydes d'azote ($NO_x$) mesurees sur voiture suivant le cycle américain FTP 75 exprimees en gramme par mile

| | Ex | Catalyseur | Emission apres vieillissement du catalyseur sur banc-moteur pendant 800 heures (g/mile) | | |
| | | | CO | HC | $NO_x$ |
| Invention | 2 | A | 3,12 | 0,35 | 0,70 |
| | 3 | B | 3,37 | 0,39 | 0,85 |
| | 4 | C | 3,05 | 0,33 | 0,75 |
| Art antérieur | 5 | D | 6,30 | 1,30 | 1,10 |

On peut constater que la stabilité de l'activité des catalyseurs multifonctionnels préparés selon l'invention est améliorée par rapport à celle d'un catalyseur multifonctionnel préparé selon l'art antérieur.

Exemple 7 - Catalyseur (E) selon l'invention

On immerge un support monolithique de 1,98 l enduit comme à l'exemple 1 dans une solution aqueuse de nitrate de cérium pour déposer après calcination 6 % en cérium par rapport au substrat poreux et au support d'alumine.

Le cérium est ainsi réparti uniformément sur toute la surface du support.

Selon l'invention, les métaux précieux sont déposés de manière différenciée sur le support monolithique.

Ainsi, le support est imprégné par trempage d'une face dans 169 ml d'une solution aqueuse d'acide hexachloroplatinique contenant 0,8 g de platine. Après adsorption totale de la solution, le support est retourné pour laisser s'écouler la solution imprégnée sur la partie déterminée du support.

On trempe ensuite l'autre face du support dans 169 ml d'une solution aqueuse d'acide hexachloroplatinique et de chlorure de palladium contenant 0,2 g de platine et 1 g de palladium. Après adsorption de la solution, le support est à nouveau retourné pour laisser s'écouler la solution ainsi adsorbée.

Le catalyseur à structure monolithique est ensuite séché à 150°C puis activé par calcination.

Le catalyseur (D) ainsi préparé contient globalement et en poids rapporté au catalyseur monolithique 0,1 % de platine, 0,1 % de palladium et 6 % de cérium.

Toutefois, dans la première partie du catalyseur (environ 50 % de sa longueur totale), la phase active a la composition suivante rapportée au poids total de cette partie du catalyseur monolithique.

Ce : 6%

Pt : 0,16%

tandis que dans l'autre partie, la phase active a la concentration suivante :

Ce : 6%

Pt : 0,04%

Pd : 0,2%

Exemple 8 - Catalyseur (F) selon l'art antérieur

On réalise un catalyseur monolithique par immersion du support dans une solution de nitrate de cérium pour obtenir comme à l'exemple 6 après calcination un support monolithique contenant 6 % de cérium en poids.

Ce support imprégné est ensuite immergé dans une solution aqueuse d'acide hexachloroplatinique et de chlorure de palladium.

Le catalyseur obtenu après calcination contient 0,1 % de platine ; 0,1 % de palladium et 6 % de cérium. La phase catalytique a une composition homogène sur toute la surface du catalyseur.

Exemple 9 - Tenue en endurance des catalyseurs D et E pour l'oxydation du monoxyde de carbone et des hydrocarbures imbrûlés dans les gaz d'échappement d'un moteur sur banc d'essais

Le moteur utilisé pour ces essais est un moteur RENAULT R20 type 843/20 de cylindrée totale 1 647 cm$^3$, équipé d'une alimentation en air secondaire par des clapets Pulsair.

Le carburant consommé par le moteur dans ces essais est de l'essence sans plomb contenant toutefois une teneur résiduelle en plomb ajustée dans tous les cas à 0,013 g/l. Le moteur étant accouplé à un frein dynamométrique, le régime de rotation et la charge imposés au moteur sont réglés de manière à réaliser le même cycle que celui décrit dans l'exemple 6.

Les réglages de carburation et d'allumage sont ceux préconisés par le constructeur.

Les catalyseurs monolithiques ont été montés dans des enveloppes métalliques soudées et installées sur la ligne d'échappement à une distance de 0,85 m de la sortie culasse. Les catalyseurs monolithiques préparés selon l'invention ont été placés de telle façon que la partie imprégnée par la première solution d'imprégnation corresponde à la face d'entrée des gaz dans le catalyseur.

Le contrôle de l'efficacité des catalyseurs s'effectue en fin d'essai en transférant les pots sur un autre banc moteur qui comporte un dispositif permettant de faire varier la température des gaz en entrée pot sans modification des réglages du moteur. La conversion des polluants est déterminée par l'analyse des gaz en amont et en aval du pot pour des températures de gaz comprises entre 300 et 550°C.

Le tableau 2 ci-dessous rassemble les résultats obtenus avec les catalyseurs E et F après environ 1 000 heures de marche (vitesse volumétrique horaire des gaz = 29 500 $^{h-1}$).

| EX | Catalyseur | Polluants | Température (°C) | | | | | | |
|---|---|---|---|---|---|---|---|---|---|
| | | | 300 | 325 | 350 | 400 | 450 | 500 | 550 |
| Invention : 7 | E | CO | 6 | 70 | 94 | 95 | 95 | 95,5 | 95,5 |
| | | HC | 2 | 35 | 67 | 75 | 80 | 84 | 85,5 |
| Art antérieur : 8 | F | CO | 0 | 0 | 22 | 39 | 90 | 91 | 91,5 |
| | | HC | 0 | 0 | 10 | 57,5 | 65 | 71 | 75,5 |

On peut constater que la stabilité de l'activité du catalyseur d'oxydation préparé selon l'invention est sensiblement améliorée par rapport à celle du catalyseur d'oxydation préparé selon l'art antérieur.

## Revendications

1. Procédé de fabrication d'un catalyseur pour le traitement des gaz d'échappement des moteurs à combustion interne du type comprenant un support monolithique dont la surface est imprégnée sur une partie de sa longueur, à partir d'une de ces extrémités, par une première phase catalytiquement active et sur l'autre partie de sa longueur par une seconde phase catalytiquement active et différente de ladite première phase catalytiquement active, caractérisé en ce qu'il consiste successivement à :
   −tremper une extrémité du support monolithique dans un volume déterminé de solution d'un précurseur d'au moins un élément constituant de la première phase catalytiquement active à imprégner, ledit volume étant égal au volume poreux de la partie du support monolithique à imprégner par ladite première phase catalytiquement active
   −retourner ledit support pour faire s'écouler ladite solution sur une longueur déterminée du support,
   −tremper l'autre extrémité dudit support dans une solution d'un précurseur d'au moins un élément constituant de la seconde phase catalytiquement active à imprégner,
   −retourner le support pour faire s'écouler ladite solution imprégnée,
   −sécher et calciner ledit support imprégné.

2. Procédé selon la revendication 1, caractérisé en ce que le volume de solution de précurseur d'élément constituant de la seconde phase catalytiquement active est au moins égal au volume poreux de l'autre partie du support monolithique à imprégner par ladite seconde phase catalytiquement active.

3. Procédé selon l'une des revendications 1 à 2 caractérisé en ce que le substrat inerte monolithique est revêtu par une matière poreuse puis sèché et calciné préalablement à l'imprégnation des première et seconde phases catalytiquement actives.

4. Procédé selon l'une des revendications 1 à 3, caractérisé en ce que les éléments constituants une phase catalytiquement active sont imprégnés simultanément.

5. Procédé selon l'une des revendications 1 à 3, caractérisé en ce que les éléments constituant une phase catalytiquement active sont imprégnés successivement, le support étant séché et calciné après chaque imprégnation.

6. Procédé selon l'une des revendications 1 à 5, caractérisé en ce que les éléments communs aux deux phases catalytiquement actives sont imprégnés de manière uniforme sur toute la surface du support en une seule étape d'imprégnation.

7. Procédé selon l'une des revendications 1 à 6, caractérisé en ce que le support monolithique est constitué d'un substrat monolithique rigide comprenant des canaux et d'une couche de matière poreuse à la surface dudit substrat.

8. Procédé selon la revendication 7 caractérisé en ce que la matière poreuse précitée est une matière macroporeuse.

9. Procédé selon l'une des revendications 7 ou 8, caractérisé en ce que la matière poreuse précitée est à base d'alumine.

10. Procédé selon l'une des revendications précédentes, caractérisé en ce que la première composition et/ou la seconde composition de la phase catalytiquement active comprend au moins un métal précieux choisi dans le groupe comprenant le platine, le palladium, le rhodium, l'iridium.

11. Procédé selon l'une des revendications précédentes, caractérisé en ce que la première composition et/ou la seconde composition de la phase catalytiquement active comprend au moins un métal choisi dans le groupe comprenant le nickel, le fer, le zirconium, le vanadium, le chrome, le cérium, le tungstène, le manganèse, l'étain, le germanium, le cobalt, l'uranium, le rhénium, les terres rares.

12. Procédé selon la revendication 11 caractérisé en ce que le métal précité est imprégné sur la totalité de la surface du catalyseur

13. Procédé selon la revendication 10 ou 11, caractérisé en ce que sur une partie de la surface du catalyseur sont présents un ou plusieurs métaux précités.

14. Procédé selon la revendication 13, caractérisé en ce que sur l'autre partie de la surface du catalyseur sont présents des métaux différents ou des concentrations différentes des métaux imprégnés sur la première partie précitée.

**Patentansprüche**

1. Verfahren zur Herstellung eines Katalysators zur Behandlung von Abgasen von Verbrennungsmotoren des Typs, der einen monolithischen Träger enthält, dessen Oberfläche, ausgehend von einem seiner Enden, auf einen Teil seiner Länge mit einer ersten katalytisch aktiven Phase und auf dem anderen Teil seiner Länge durch eine zweite katalytisch aktive Phase imprägniert ist, die verschieden von der ersten katalytisch aktiven Phase ist, dadurch gekennzeichnet, daß es darin besteht, daß in aufeinanderfolgender Weise:
– das eine Ende des monolithischen Trägers in ein bestimmtes Volumen einer Vorstufenlösung mit wenigstens einem Bestandteil, der die erste zu imprägnierende, katalytisch aktive Phase bildet, eingetaucht wird, wobei das Volumen gleich dem Porenvolumen des durch die erste katalytisch aktive Phase zu imprägnierenden monolithischen Trägerteils ist;
– der Träger gewendet wird, damit die Lösung über eine bestimmte Länge des Trägers abfließen kann;
– das andere Ende des Trägers in eine Vorstufenlösung mit wenigstens einem Bestandteil eingetaucht wird, der die zweite katalytisch aktive Phase zum Imprägnieren bildet;
– der Träger gewendet wird, damit die Imprägnierungslösung abfließen kann;
– der imprägnierte Träger getrocknet und calciniert wird.

2. Verfahren nach Anspruch 1, dadurch gekennzeichnet, daß das Volumen der Lösung der Vorstufen des Elements, das die zweite katalytisch aktive Phase bildet, mindestens gleich dem Porenvolumen des anderen durch die zweite katalytisch aktive Phase zu imprägnierenden, monolithischen Teils des Trägers ist.

3. Verfahren nach einem der Ansprüche 1 oder 2, dadurch gekennzeichnet, daß das inerte, monolithische Substrat mit einem porösen Material versehen wird, dann, vor der Imprägnierung der ersten und zweiten katalytisch aktiven Phase, getrocknet und calciniert wird.

4. Verfahren nach einem der Ansprüche 1 bis 3, dadurch gekennzeichnet, daß die Bestandteile, die die katalytisch aktive Phase bilden, gleichzeitig imprägniert werden.

5. Verfahren nach einem der Ansprüche 1 bis 3, dadurch gekennzeichnet, daß die Bestandteile, die eine katalytisch aktive Phase bilden, nacheinander imprägniert werden, wobei der Träger nach jeder Imprägnierung getrocknet und calciniert wird.

6. Verfahren nach einem der Ansprüche 1 bis 5, dadurch gekennzeichnet, daß die gemeinsamen Bestandteile der beiden katalytisch aktiven Phasen in einer einheitlichen Form über die gesamte Oberfläche des Trägers in einem einzigen Imprägnierungsschritt imprägniert werden.

7. Verfahren nach einem der Ansprüche 1 bis 6, dadurch gekennzeichnet, daß der monolithische Träger aus einem steifen, monolithischen Substrat besteht, das Kanäle und eine Schicht eines porösen Materials auf der Substratoberfläche enthält.

8. Verfahren nach Anspruch 7, dadurch gekennzeichnet, daß das poröse Material ein makroporöses Material ist.

9. Verfahren nach einem der Ansprüche 7 oder 8, dadurch gekennzeichnet, daß das poröse Material ein Material auf Aluminiumoxidbasis ist.

10. Verfahren nach einem der vorhergehenden Ansprüche, dadurch gekennzeichnet, daß die erste Zusammensetzung und/oder die zweite Zusammensetzung der katalytisch aktiven Phase wenigstens ein Edelmetall enthält, das aus der Gruppe von Platin, Palladium, Rhodium und Iridium ausgewählt ist.

11. Verfahren nach einem der vorhergehenden Ansprüche, dadurch gekennzeichnet, daß die erste Zusammensetzung und/oder die zweite Zusammensetzung der katalytisch aktiven Phase wenigstens ein Metall, ausgewählt aus Nickel, Eisen, Zirkon, Vanadium, Chrom, Cer, Wolfram, Mangan, Zinn, Germanium, Kobalt, Uran, Rhenium und Seltenen Erden, enthält.

12. Verfahren nach Anspruch 11, dadurch gekennzeichnet, daß das Metall auf der Gesamtoberfläche des Katalysators imprägniert wird.

13. Verfahren nach Anspruch 10 oder 11, dadurch gekennzeichnet, daß ein oder mehrere der Metalle auf einem Teil der Katalysatoroberfläche vorhanden sind.

14. Verfahren nach Anspruch 13, dadurch gekennzeichnet, daß auf dem anderen Teil der Katalysatoroberfläche von den auf dem ersten Teil abgeschiedenen Metallen verschiedene Metalle oder verschie dene Konzentrationen von Metallen vorliegen.

## Claims

1. Process for the manufacture of a catalyst for the treatment of the exhaust gases of internal combustion engines, of the type comprising a monolithic support whose surface is impregnated over a part of its length, starting at one of its ends, with a first catalytically active phase and over the other part of its length with a second catalytically active phase other than the said first catalytically active phase, characterised in that it consists successively in:

– soaking one end of the monolithic support in a specified volume of solution of a precursor of at least one constituent element of the first catalytically active phase to be impregnated, the said volume being equal to the pore volume of the part of the monolithic support to be impregnated with the said first catalytically active phase

– turning the said support over to make the said solution drain off over a specified length of the support,

– soaking the other end of the said support in a solution of a precursor of at least one constituent element of the second catalytically active phase to be impregnated,

– turning the support over to make the said impregnated solution drain off,

– drying and calcining the said impregnated support.

2. Process according to Claim 1, characterised in that the volume of solution of precursor of constituent element of the second catalytically active phase is at least equal to the pore volume of the other part of the monolithic support to be impregnated with the said second catalytically active phase.

3. Process according to either of Claims 1 and 2, characterised in that the monolithic inert substrate is coated with a porous material and then dried and calcined before the impregnation of the first and second catalytically active phases.

4. Process according to one of Claims 1 to 3, characterised in that the elements constituting a catalytically active phase are impregnated simultaneously.

5. Process according to one of Claims 1 to 3, characterised in that the elements constituting a catalytically active phase are impregnated successively, the support being dried and calcined after each impregnation.

6. Process according to one of Claims 1 to 5, characterised in that the elements common to the two catalytically active phases are impregnated uniformly over the whole surface of the support in a single impregnation stage.

7. Process according to one of Claims 1 to 6, characterised in that the monolithic support consists of a rigid monolithic substrate comprising channels and a layer of porous material at the surface of the said substrate.

8. Process according to Claim 7, characterised in that the abovementioned porous material is a macroporous material.

9. Process according to either of Claims 7 and 8, characterised in that the abovementioned porous material is based on alumina.

10. Process according to one of the preceding claims, characterised in that the first composition and/or the second composition of the catalytically active phase comprises at least one precious metal chosen from the group comprising platinum, palladium, rhodium and iridium.

11. Process according to one of the preceding claims, characterised in that the first composition and/or the second composition of the catalytically active phase comprises at least one metal chosen from the group comprising nickel, iron, zirconium, vanadium, chromiun, cerium, tungsten, manganese, tin, germanium, cobalt, uranium, rhenium and the rare earths.

12. Process according to Claim 11, characterised in that the abovementioned metal is impregnated over the whole of the surface of the catalyst.

13. Process according to Claim 10 or 11, characterised in that one or more of the abovementioned metals are present on a part of the surface of the catalyst.

14. Process according to Claim 13, characterised in that different metals or different concentrations of the metals impregnated on the abovementioned first part are present on the other part of the surface of the catalyst.